# EUROPÄISCHE PATENTSCHRIFT

(11) **EP 3 069 526 B1**
(45) Veröffentlichungstag und Bekanntmachung des Hinweises auf die Patenterteilung: **20.03.2024**
(21) Anmeldenummer: 14796133.8
(22) Anmeldetag: 12.11.2014
(51) Int. Cl.: H04Q 1/14

(54) **KOMMUNIKATIONSMODUL**
COMMUNICATION MODULE
MODULE DE COMMUNICATION

(30) Priorität: 14.11.2013 DE 102013112511
(43) Veröffentlichungstag der Anmeldung: 21.09.2016
(73) Patentinhaber: Phoenix Contact GmbH & Co. KG, 32825 Blomberg (DE)
(72) Erfinder: BOYSEN, Gerrit, 32760 Detmold (DE); KLOCKE, Matthias, 33334 Gütersloh (DE); HAUSMANN, Ralf, 32825 Blomberg (DE); FREISCHLAD, Stephan, 32816 Schieder-Schwalenberg (DE); GROSSPIETSCH, Sven, 32825 Blomberg-Cappel (DE)
(74) Vertreter: Patentship Patentanwaltsgesellschaft mbH
(86) Internationale Anmeldenummer: PCT/EP2014/074320
(87) Internationale Veröffentlichungsnummer: WO 2015/071283

(56) Entgegenhaltungen:
- DE-A1- 10 000 098
- US-A- 5 805 404
- US-A1- 2002 141 543
- US-A1- 2007 003 056

## Beschreibung

Die vorliegende Erfindung betrifft ein Kommunikationsmodul mit einer Kommunikationsschaltung mit einer Kommunikationsschnittstelle zum Übermitteln von Daten auf einer elektrischen Datenleitung.

Im letzten Jahrhundert war eine Schmalband-Kommunikation in vielen Industrieanwendungen ausreichend. Über große Entfernungen wurden Kupferleitungen verlegt, da diese die gewünschten Anforderungen optimal erfüllten. Heutzutage kommunizieren immer mehr Steuerungen, Industrie-PCs und vergleichbare Komponenten jedoch über Ethernet untereinander oder mit einer Leitzentrale. Die zu übertragende Datenmenge hat sich somit vervielfacht. Der Bedarf an einer Breitbandkommunikation wächst kontinuierlich. Neue Kommunikationsstrecken werden daher nicht mehr mit Kupfersondern häufig mit Glasfaserkabel aufgebaut. Ein Austausch alter, bereits verlegter Kupferleitungen durch moderne Glasfaserkabel ist oftmals teuer und zeitaufwändig. Daher wird eine moderne Hochgeschwindigkeits-Kommunikation in vielen Fällen über die alten, bestehenden Kupferleitungen realisiert.

Auch wenn heutzutage über alte Kupferleitungen große Datenraten schnell übertragen werden können, wie beispielsweise über moderne Modulationsverfahren wie DSL, besteht das Problem, dass die Kupferadern auch elektromagnetische Störungen übertragen, die wiederum das Kommunikationsmodul beschädigen können, wie beispielsweise Überspannungen durch einen entfernten Blitzeinschlag. Die Verwendung eines geeigneten Überspannungsschutzes ist somit elementar in vielen industriellen, drahtgebundenen Fernkommunikationsanwendungen. Für Kommunikationsmodule kann ein separater Überspannungsschutz verwendet werden. Dieser Überspannungsschutz umfasst keine Kommunikationsschnittstelle zum Kommunikationsmodul.

Die Druckschrift DE 200 01 752 U1 offenbart ein Überspannungsschutzmagazin und eine Verteilereinrichtung der Telekommunikationstechnik. Das Überspannungsschutzmagazin ist auf ein Trägerelement aufsteckbar und ist mit einer Anschlussleiste und gegebenenfalls mit einem Kabelstecker zur Ausbildung eines Anschlusssystems verbunden.

In der US 5,805,404 A ist ein Verbindungsmodul mit einem Aufnahmeschlitz zur Aufnahme eines strom- und spannungsbegrenzenden Schaltungsschutzmoduls offenbart.

Die Druckschrift US 2002/141543 A1 offenbart ein graphisches Userinterface zum Testen von Telefonleitungen.

Die Druckschrift DE 100 00 098 A1 betrifft ein satellitengestütztes Kommunikationssystem mit Rückkanalführung über den D-Kanal eines ISDN-Anschlusses.

Die Druckschrift US 2007/003056 A1 offenbart in der Zusammenfassung eine Anordnung mit einem Telekommunikationsmodul und einem Schutzstecker.

Es ist die der Erfindung zugrundeliegende Aufgabe, ein Kommunikationsmodul mit einem Überspannungsschutz anzugeben, bei dem ein Verdrahtungsaufwand verringert wird und eine Fehlverdrahtung eines Überspannungsschutzes verhindert wird.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch ein Kommunikationsmodul gelöst, mit einer Kommunikationsschaltung mit einer Kommunikationsschnittstelle zum Übermitteln von Daten auf einer elektrischen Datenleitung und einem Überspannungsschutzmodul zum Schützen der Kommunikationsschaltung vor einer Überspannung auf der elektrischen Datenleitung, das einsteckbar in das Kommunikationsmodul integriert ist. Dadurch wird beispielsweise der technische Vorteil erreicht, dass das Überspannungsschutzmodul bei einem Defekt ausgetauscht werden kann und sich ein Verdrahtungsaufwand verringert.

In einer vorteilhaften Ausführungsform des Kommunikationsmoduls umfasst das steckbare Überspannungsschutzmodul einen Gasableiter, eine Schutzdiode und/oder einen Thyristor. Dadurch wird beispielsweise der technische Vorteil erreicht, dass eine effiziente Ableitung einer Überspannung erfolgt.

In einer weiteren vorteilhaften Ausführungsform des Kommunikationsmoduls weist das steckbare Überspannungsschutzmodul eine einzige Anschlussseite zum elektrischen Anschließen des Überspannungsschutzmoduls an die Kommunikationsschaltung auf. Dadurch wird beispielsweise der technische Vorteil erreicht, dass das Überspannungsschutzmodul auf einfache Weise in das Kommunikationsmodul eingesetzt werden kann.

In einer weiteren vorteilhaften Ausführungsform des Kommunikationsmoduls ist das steckbare Überspannungsschutzmodul anschlusssicher in das Kommunikationsmodul einsteckbar. Dadurch wird beispielsweise der technische Vorteil erreicht, dass ein Fehlanschluss des Überspannungsschutzmoduls verhindert werden kann.

In einer weiteren vorteilhaften Ausführungsform des Kommunikationsmoduls ist das Überspannungsschutzmodul in einem Schutzmodulgehäuse integriert und die Kommunikationsschaltung in einem Schaltungsgehäuse integriert. Dadurch wird beispielsweise der technische Vorteil erreicht, dass eine Beschädigung der Module verhindert werden kann.

In einer weiteren vorteilhaften Ausführungsform des Kommunikationsmoduls sind das Schutzmodulgehäuse und das Schaltungsgehäuse formtechnisch aufeinander angepasst, um ein fehlerhaftes Einstecken des Überspannungsschutzmoduls zu verhindern. Dadurch wird beispielsweise der technische Vorteil erreicht, dass ein fehlerhaftes Einsetzen des Überspannungsschutzmoduls verhindert wird.

In einer weiteren vorteilhaften Ausführungsform des Kommunikationsmoduls ist das Kommunikationsmodul auf einer Hutschiene montierbar. Dadurch wird beispielsweise der technische Vorteil erreicht, dass eine schnelle Montage des Kommunikationsmoduls erreicht wird. Bei entsprechender Auslegung kann die Überspannung über die mechanische Befestigung des Kommunikationsmoduls über die Hutschiene abgeleitet werden. Dadurch wird der Verdrahtungsaufwand weiter reduziert und ein Anschluss eines Schutzleiters entfällt.

In einer weiteren vorteilhaften Ausführungsform des Kommunikationsmoduls umfasst die Kommunikationsschaltung mehrere Kommunikationsschnittstellen zum Übermitteln von Daten auf jeweils einer elektrischen Datenleitung und das steckbare Überspannungsschutzmodul ist ausgebildet, vor einer Überspannung auf jeder der elektrischen Datenleitungen zu schützen. Dadurch wird beispielsweise der technische Vorteil erreicht, dass das Kommunikationsmodul in einer Linienstruktur oder einer Ringstruktur integriert werden kann. Mehrere Kommunikationsschnittstellen können auch Baumstrukturen bilden oder zur Erhöhung eines Datendurchsatzes dienen. Beispielsweise kann das Kommunikationsmodul mit mehreren Schnittstellen ein Sternpunkt einer Sternstruktur sein, wie in einem 19-Zoll-Schrank in einer Zentrale.

In einer weiteren vorteilhaften Ausführungsform des Kommunikationsmoduls ist das Überspannungsschutzmodul ausgebildet, eine Überspannung auf der elektrischen Datenleitung zu erfassen. Dadurch wird beispielsweise der technische Vorteil erreicht, dass eine digitale Störungsmeldung in Reaktion auf die erfasste Störung erzeugt werden kann.

In einer weiteren vorteilhaften Ausführungsform des Kommunikationsmoduls umfasst das Kommunikationsmodul eine Datenschnittstelle zum Übermitteln von Daten zwischen dem Überspannungsschutzmodul und der Kommunikationsschaltung. Dadurch wird beispielsweise der technische Vorteil erreicht, dass die Verarbeitungskapazität des Kommunikationsmoduls zum Weiterleiten oder Verarbeitung der Störungsmeldung genutzt werden kann.

In einer weiteren vorteilhaften Ausführungsform des Kommunikationsmoduls ist das Überspannungsschutzmodul ausgebildet, einen Zustand des Überspannungsschutzmoduls an die Kommunikationsschaltung zu senden. Dadurch wird beispielsweise ebenfalls der technische Vorteil erreicht, dass die Verarbeitungskapazität des Kommunikationsmoduls zum Weiterleiten oder Verarbeitung der Störungsmeldung genutzt werden kann.

In einer weiteren vorteilhaften Ausführungsform des Kommunikationsmoduls umfasst die Kommunikationsschaltung eine Fernkommunikationsschnittstelle zum Senden des Zustands des Überspannungsschutzmoduls an ein externes Datennetz. Dadurch wird beispielsweise der technische Vorteil erreicht, dass ein Zustand des Überspannungsschutzmoduls von einem fern gelegenen Ort überwacht werden kann.

In einer weiteren vorteilhaften Ausführungsform des Kommunikationsmoduls ist das externe Datennetz ein lokales Netz oder ein Mobilfunknetz. Dadurch wird beispielsweise der technische Vorteil erreicht, dass die Daten an mobile Geräte übertragen werden können.

In einer weiteren vorteilhaften Ausführungsform des Kommunikationsmoduls umfasst das Kommunikationsmodul einen Web-Server zum externen Abfragen des Zustandes des Überspannungsschutzmoduls. Dadurch wird beispielsweise der technische Vorteil erreicht, dass der Zustand mit geringem Aufwand abgefragt werden kann.

In einer weiteren vorteilhaften Ausführungsform des Kommunikationsmoduls ist das Kommunikationsmodul ein Modem, ein Switch oder ein Router Dadurch wird beispielsweise der technische Vorteil erreicht, dass das Kommunikationsmodul durch ein zur Datenverarbeitung geeignetes Gerät gebildet wird. Das Überspannungsschutzmodul kann beispielsweise Ethernet-Datenleitungen absichern oder für die Versorgungsspannung eines Geräts verwendet werden.

Ausführungsbeispiele der Erfindung sind in den Zeichnungen dargestellt und werden im Folgenden näher beschrieben.

Es zeigen:
- Fig. 1: eine schematische Ansicht eines Überspannungsschutzes;
- Fig. 2: eine schematische Ansicht eines Kommunikationsmoduls mit externem Überspannungsschutz;
- Fig. 3: eine schematische Ansicht eines Kommunikationsmoduls mit integriertem Überspannungsschutzmodul in einer Punkt-zu-Punkt-Kommunikation;
- Fig. 4: eine schematische Ansicht eines Kommunikationsmoduls mit mehreren Kommunikationsschnittstellen;
- Fig. 5: eine schematische Ansicht eines Kommunikationsmoduls mit mehreren Kommunikationsschnittstellen und einer Statusabfrage; und
- Fig. 6: eine typische Anwendung eines DSL-Routers als Kommunikationsmodul.

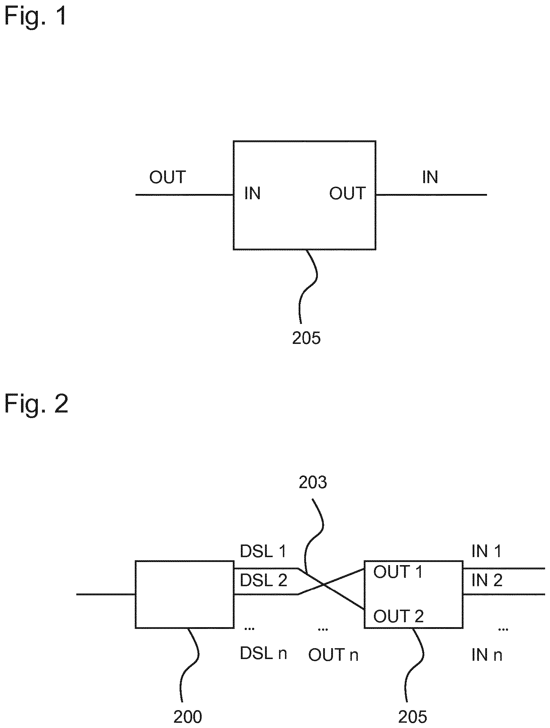

Fig. 1 zeigt eine schematische Ansicht eines Überspannungsschutzes 205. Der Überspannungsschutz 205 weist zwei Anschlüsse auf, die einen Eingang IN und einen Ausgang OUT des Überspannungsschutzes 205 bilden. Bei der Installation können der Eingang IN und Ausgang OUT vertauscht werden. Wird der Überspannungsschutz 205 fehlerhaft angeschlossen, wie beispielsweise bei einem Vertauschen der Anschlüsse, kann die Funktion des Überspannungsschutzes nicht mehr gewährleistet werden.

Fig. 2 zeigt eine schematische Ansicht eines Kommunikationsmoduls 200 mit externem Überspannungsschutz 205. Der Überspannungsschutz 205 ist eine zusätzliche Komponente in einem Schaltschrank und nimmt zusätzlichen Platz ein. Der Überspannungsschutz 205 wird mittels elektrischer Leitungen mit dem Kommunikationsmodul 200 verdrahtet. Dadurch entsteht ein erhöhter Verdrahtungsaufwand.

Besitzt das Kommunikationsmodul 200, wie beispielsweise ein SHDSL-Ethernet-Extender, mehr als einen DSL-Port und hat der Überspannungsschutz 205 mehr als einen Eingang und einen Ausgang, können die Leitungen zwischen Kommunikationsmodul 200 und Überspannungsschutz 205 fehlerhaft verdrahtet werden. Obwohl die Eingänge IN1 und IN2 und die Ausgänge OUT1 und OUT2 richtig verdrahtet sind, sind der DSL-Port DSL1 und DSL-Port DSL2 überkreuz verdrahtet. Dadurch entsteht ein Verdrahtungsfehler zwischen dem Kommunikationsmodul 200 und dem Überspannungsschutz 205.

Für eine Breitbandkommunikation wird ein spezieller Überspannungsschutz 205 verwendet, der eine große Übertragungsbandbreite bietet und eine Hochfrequenz passieren lässt. Wird in diesem Fall ein Standardüberspannungsschutz verwendet, kann keine Hochgeschwindigkeits-Kommunikation durchgeführt werden. Die richtige Auswahl des Überspannungsschutzes 205 ist somit eine Voraussetzung für eine erfolgreiche Breitbandkommunikation. Bei einer Kommunikation zwischen zwei Teilnehmern (Sender-Empfänger), kann eine Fehlverdrahtung des Überspannungsschutzes 205 auf beiden Seiten auftreten. Somit steigt auch die Wahrscheinlichkeit, dass ein Fehler in mehr als in einer Station auftritt.

Bricht die Kommunikation zwischen zwei Kommunikationsmodulen 200 ab, kann nicht überprüft werden, ob die elektrische Datenleitung 203unterbrochen worden ist, beispielsweise durch Bagger-Arbeiten, oder ob der separate Überspannungsschutz 205 ausgelöst hat und dabei zerstört worden ist, beispielsweise durch einen Blitzschlag. Das Kommunikationsmodul 200 und der Überspannungsschutz 205, tauschen keine Informationen untereinander aus.

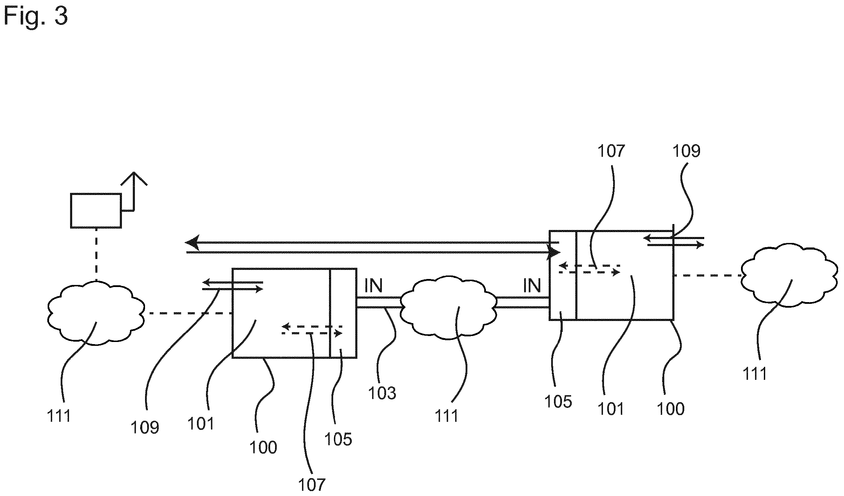

Fig. 3 zeigt eine schematische Ansicht eines Kommunikationsmoduls 100 mit integriertem Überspannungsschutzmodul 105 in einer Punkt-zu-Punkt-Kommunikation. Das Kommunikationsmodul 100 umfasst eine Kommunikationsschaltung 101 mit einer Kommunikationsschnittstelle zum Übermitteln von Daten auf einer elektrischen Datenleitung 103. Die Kommunikationsschaltung 101 bildet beispielsweise eine Modem/Router- Baugruppe. Die Datenleitung 103 besteht beispielweise aus einem Adernpaar elektrischer Leiter für die Fernkommunikation. Das Kommunikationsmodul 100 ist über Netzwerke 111 und eine Fernkommunikationsschnittstelle 109 mit einem anderen Kommunikationsmodul verbunden. Das andere Kommunikationsmodul kann beispielsweise ein Mobilfunkmodem sein, das eine lokale Alarmierung aus dem Überspannungsschutzmodul 105 in andere Netze überträgt oder über das auf das Kommunikationsmodul 100 zugegriffen werden kann.

Das Überspannungsschutzmodul 105 wird als steckbares Modul in das Kommunikationsmodul 100 integriert. Das Überspannungsschutzmodul 105 umfasst beispielsweise einen Gasableiter oder eine Schutzdiode, beide Komponenten in Kombination oder weitere Schutzelemente. Im Überspannungsschutzmodul 105 werden sowohl Gasableiter als Grobschutz als auch Schutzdioden/Thyristoren als Feinschutz verwendet werden.

Dadurch entsteht der Vorteil, dass die Ausgänge im Kommunikationsmodul 100 und die Eingänge im Überspannungsschutzmodul 105 angeordnet sind. Dadurch können Verdrahtungsfehler vermieden werden. In das Kommunikationsmodul 100 kann ein passendes, produktspezifisches Überspannungsschutzmodul 105 eingesetzt werden.

Durch die Integration des Überspannungsschutzmoduls 105 kann die Bauform kompakter sein. Durch das Überspannungsschutzmodul 105 wird ein steckbarer Überspannungsschutz mit nur einer Anschlussseite für den Benutzer realisiert. Zudem kann durch die Integration eines steckbaren Überspannungsschutzmoduls 105 eine einfache Kommunikation zwischen dem Überspannungsschutzmodul 105 und dem Kommunikationsmodul 100 über eine Datenschnittstelle 107 realisiert werden.

Das Kommunikationsmodul 100 kann in einer Punkt-zu-Punkt-Kommunikation eingesetzt werden. Zwischen dem Kommunikationsmodul 100 und dem Überspannungsschutzmodul 105 ist eine Datenschnittstelle 107 zum Kommunikation gebildet. Das Überspannungsschutzmodul 105 detektiert eine Störung auf der elektrischen Datenleitung 103. In einem einfachen Fall kann ein Status "Gasableiter gezündet" erkannt werden. Überspannungsschutzmodul 105 übergibt daraufhin den erfassten Status an die Kommunikationsschaltung 101 weiter, wie beispielsweise eine Netzwerk-/Modem-/Router-Baugruppe. Die Kommunikationsschaltung 101 kann daraufhin reagieren und den Status weiterverarbeiten oder weiterleiten.

Beispielsweise kann das Kommunikationsmodul 100 automatisch einen Alarm über das lokale Netzwerk 111 versenden, der anzeigt, dass das Überspannungsschutzmodul 100 vorgeschädigt ist. Somit kann ein Benutzer zeitnah vor einem Geräteausfall informiert werden. Der Benutzer kann rechtzeitig einen neues Überspannungsschutzmodul 105 in die Kommunikationsstrecke integrieren, die Ausfallwahrscheinlichkeiten reduzieren und die Verfügbarkeit erhöhen.

Durch die Kombination des Kommunikationsmoduls 100 mit dem Überspannungsschutzmodul 105 können weitere Funktionen für eine Diagnose ermöglicht werden, da die Kommunikationsschaltung 101 des Kommunikationsmoduls 100 mit beispielsweise einem Linux-Betriebssystem in der Regel über mehr Rechenleistung verfügt als das steckbare Überspannungsschutzmodul mit einem Mikrokontroller. Diagnosedaten können beispielsweise als einfacher Klartext ausgegeben werden, beispielsweise mit der Zeichenkette "Überspannungsschutz vorgeschädigt".

Die Diagnosedaten können als grafische Darstellung über das Web-Based-Management dargestellt werden, wie beispielsweise als Zeitstrahl, Balkendiagramm, Statistik oder Wahrscheinlichkeit. Außerdem können die Kommunikationsmodule 100 die Diagnosedaten des eigenen Überspannungsschutzmoduls 105 auch an andere Teilnehmer verteilen, beispielsweise über ein LAN - Local Area Network oder weltweit über ein WAN - Wide Area Network. Dadurch ist die einfache Realisierung einer zentralen oder dezentralen Informationsdatenbank denkbar.

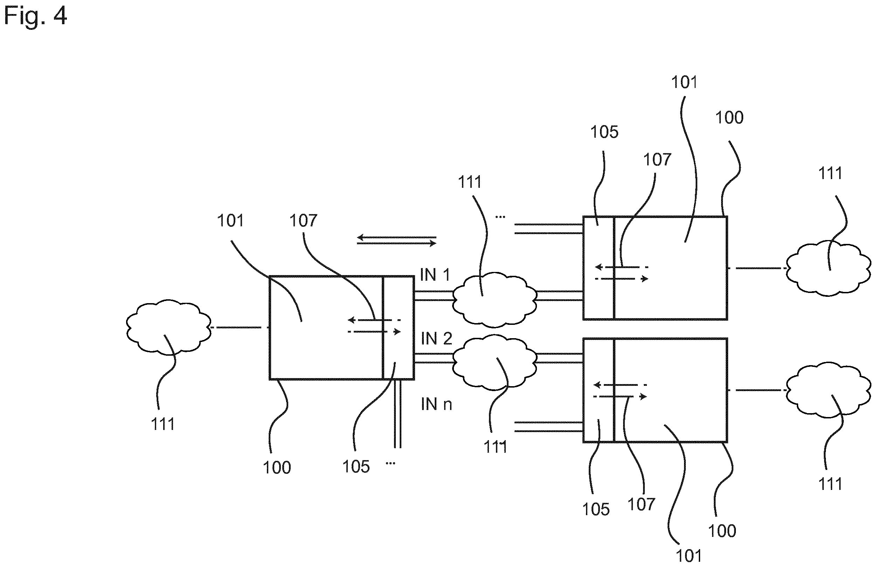

Fig. 4 zeigt eine schematische Ansicht eines Kommunikationsmoduls 100 mit mehreren Kommunikationsschnittstellen in Linie-/ Ring-/ Mischstruktur-Kommunikation. Ein Benutzer kann den Status des Überspannungsschutzmoduls 105 über das lokale Netzwerk 111 aus der Ferne aktiv abfragen, wie beispielsweise über SNMP oder über einen Zugriff auf eine Webseite.

Das Kommunikationsmodul 100 verfügt über mehr als eine Fernkommunikationsschnittstelle 109. Beispielsweise können dadurch die Kommunikationsmodule 100 in einer Linie-, in einem Ring-, oder in einer Mischstruktur verschaltet werden. Der Status eines jeden Überspannungsschutzmoduls 105 kann somit auch an andere entfernte Geräte übertragen werden, die wiederum den Status oder eine Alarmierung weiterleiten, beispielsweise an andere entfernte Geräte oder in das entsprechende lokale Netzwerk.

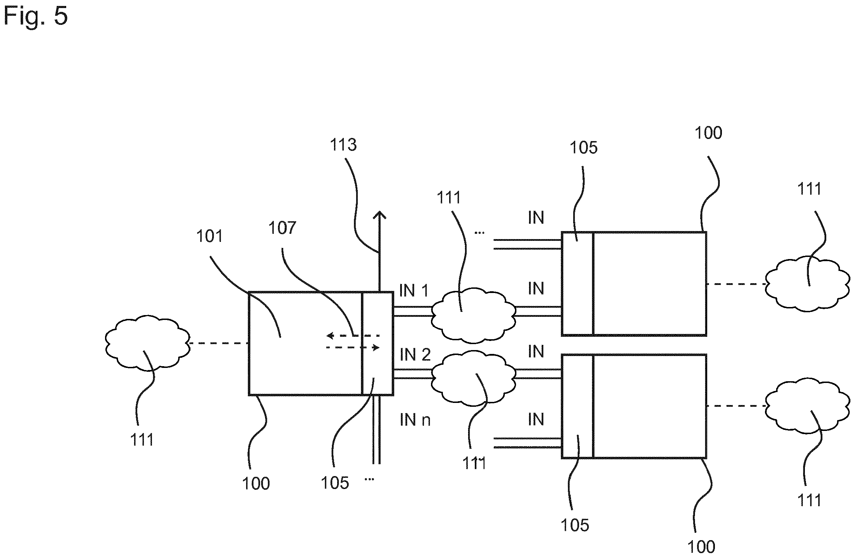

Fig. 5 zeigt eine schematische Ansicht eines Kommunikationsmoduls 100 mit mehreren Kommunikationsschnittstellen und einer Statusabfrage in einer Mischstruktur, bei der die Fernkommunikation über unterschiedliche Medien erfolgt. Die Statusübermittlung/Statusabfrage des Überspannungsschutzmoduls 105 verläuft über unterschiedliche Medien, wie beispielsweise drahtgebunden und/oder drahtlos über Mobilfunk 113.

Im Allgemeinen kann das Kommunikationsmodul 100 eine beliebige Bauform aufweisen. Beispielsweise ist das Kommunikationsmodul 100 mit einem Gehäuse auf einer Hutschiene montierbar oder in der Form eines 19"-Einschubes realisiert, wie für eine Leitzentrale.

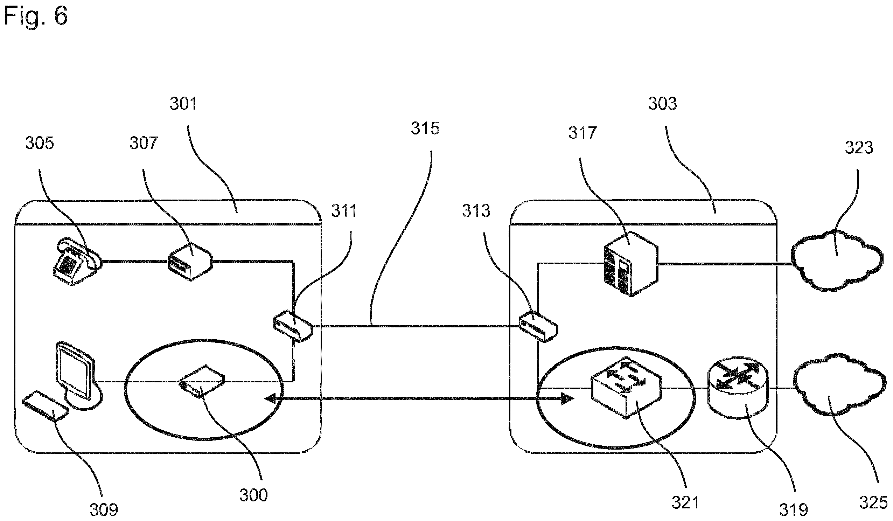

Fig. 6 zeigt eine typische Anwendung eines DSL-Routers als Kommunikationsmodul 100 im öffentlichen Telefonnetz. Der DSL-Router 300 eines Teilnehmers 301 kommuniziert mit einem Digital Subscriber Line Access Multiplexer (DSLAM) 321 in einer Vermittlungsstelle 303. Der Teilnehmer 301 ist über die Splitter 311 und 313 und die Teilnehmeranschlussleitung 315 als Datenleitung mit der Vermittlungsstelle 303 verbunden.

Der Teilnehmer 301 umfasst ein Telefon 305, ein Netzabschlussgerät (NTBA) 307, einen Personal Computer 309 und den DSL-Router 300 als Kommunikationsmodul 100. Der DSL-Router 300 umfasst das Überspannungsschutzmodul.

Die Vermittlungsstelle 303 umfasst eine digitale Vermittlung 317, einen Breitband-Zugangsserver (DSL-AC) 319 und den Digital Subscriber Line Access Multiplexer (DSL-AM) 321. Die Vermittlungsstelle 303 ist an das Telefonnetz 323 und das Internet 325 angeschlossen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kommunikationsmodul
- 101: Kommunikationsschaltung
- 103: Datenleitung
- 105: Überspannungsschutzmodul
- 107: Datenschnittstelle
- 109: Fernkommunikationsschnittstelle
- 111: Datennetz
- 113: Mobilfunk

- 200: Kommunikationsmodul
- 203: Datenleitung
- 205: Überspannungsschutz

- 300: DSL-Router
- 301: Teilnehmer
- 303: Vermittlungsstelle
- 305: Telefon
- 307: Netzabschlussgerät
- 309: Personal Computer
- 311: Splitter
- 313: Splitter
- 315: Teilnehmeranschlussleitung
- 317: Digitale Vermittlung
- 319: Breitband-Zugangsserver
- 321: Digital Subscriber Line Access Multiplexer
- 323: Telefonnetz
- 325: Internet

## Patentansprüche

1. Kommunikationsmodul (100), mit:
einer Kommunikationsschaltung (101) mit einer Kommunikationsschnittstelle zum Übermitteln von Daten auf einer elektrischen Datenleitung (103); und
einem Überspannungsschutzmodul (105) zum Schützen der Kommunikationsschaltung (101) vor einer Überspannung auf der elektrischen Datenleitung (103), das einsteckbar in das Kommunikationsmodul (100) integriert ist,
wobei das Kommunikationsmodul (100) eine Datenschnittstelle (107) zum Übermitteln von Daten zwischen dem Überspannungsschutzmodul (105) und der Kommunikationsschaltung (101) umfasst,
**dadurch gekennzeichnet, dass** das Überspannungsschutzmodul (105) ausgebildet ist, einen Zustand des Überspannungsschutzmoduls (105) an die Kommunikationsschaltung (101) zu senden, und wobei die Kommunikationsschaltung (101) eine Fernkommunikationsschnittstelle (109) zum Senden des Zustands des Überspannungsschutzmoduls (105) an ein externes Datennetz (111) umfasst,
wobei das Kommunikationsmodul (100) ausgebildet ist um automatisch einen Alarm über das externe Datennetz (111) zu versenden, der anzeigt, dass das Überspannungsschutzmodul (105) vorgeschädigt ist.

2. Kommunikationsmodul (100) nach Anspruch 1, wobei das steckbare Überspannungsschutzmodul (105) einen Gasableiter, eine Schutzdiode und/oder einen Thyristor umfasst.

3. Kommunikationsmodul (100) nach einem der vorangehenden Ansprüche, wobei das steckbare Überspannungsschutzmodul (105) eine einzige Anschlussseite zum elektrischen Anschließen des Überspannungsschutzmoduls (105) an die Kommunikationsschaltung (101) aufweist.

4. Kommunikationsmodul (100) nach einem der vorangehenden Ansprüche, wobei das steckbare Überspannungsschutzmodul (105) anschlusssicher in das Kommunikationsmodul (100) einsteckbar ist.

5. Kommunikationsmodul (100) nach einem der vorangehenden Ansprüche, wobei das Überspannungsschutzmodul (105) in einem Schutzmodulgehäuse integriert ist und die Kommunikationsschaltung (101) in einem Schaltungsgehäuse integriert ist.

6. Kommunikationsmodul (100) nach Anspruch 5, wobei das Schutzmodulgehäuse und das Schaltungsgehäuse formtechnisch aufeinander angepasst sind, um ein fehlerhaftes Einstecken des Überspannungsschutzmoduls (105) zu verhindern.

7. Kommunikationsmodul (100) nach einem der vorangehenden Ansprüche, wobei das Kommunikationsmodul (100) auf einer Hutschiene montierbar ist.

8. Kommunikationsmodul (100) nach einem der vorangehenden Ansprüche, wobei die Kommunikationsschaltung (101) mehrere Kommunikationsschnittstellen zum Übermitteln von Daten auf jeweils einer elektrischen Datenleitung (103) umfasst und das steckbare Überspannungsschutzmodul (105) ausgebildet ist, vor einer Überspannung auf jeder der elektrischen Datenleitungen (103) zu schützen.

9. Kommunikationsmodul (100) nach einem der vorangehenden Ansprüche, wobei das Überspannungsschutzmodul (105) ausgebildet ist, eine Überspannung auf der elektrischen Datenleitung (103) zu erfassen.

10. Kommunikationsmodul (100) nach einem der vorangehenden Ansprüche, wobei das externe Datennetz (111) ein lokales Netz oder ein Mobilfunknetz ist.

11. Kommunikationsmodul (100) nach einem der vorangehenden Ansprüche, wobei das Kommunikationsmodul (100) einen Web-Server zum externen Abfragen des Zustandes des Überspannungsschutzmoduls (105) umfasst.

12. Kommunikationsmodul (100) nach einem der vorangehenden Ansprüche, wobei das Kommunikationsmodul (100) ein Modem, ein Switch oder ein Router ist.

## Claims

1. Communication module (100), comprising:
a communication circuit (101) with a communication interface for transmitting data on an electrical data line (103); and
an overvoltage protection module (105) for protecting the communication circuit (101) from overvoltage on the electrical data line (103), which overvoltage protection module is integrated into the communication module (100) in a pluggable manner,
wherein the communication module (100) comprises a data interface (107) for transferring data between the overvoltage protection module (105) and the communication circuit (101),
**characterized in that** the overvoltage protection module (105) is adapted to transmit a status of the overvoltage protection module (105) to the communication circuit (101), and wherein the communication circuit (101) comprises a distance communication interface (109) for transmitting the status of the overvoltage protection module (105) to an external data network (111),
where the communication module (100) is configured to automatically send an alarm via the external data network (111), which indicates that the overvoltage protection module (105) is pre-damaged.

2. Communication module (100) according to claim 1, wherein the pluggable overvoltage protection module (105) comprises a gas discharge tube, a protective diode and/or a thyristor.

3. Communication module (100) according to one of the preceding claims, wherein the pluggable overvoltage protection module (105) has a single connection side for electrically connecting the overvoltage protection module (105) to the communication circuit (101).

4. Communication module (100) according to any one of the preceding claims, wherein the pluggable overvoltage protection module (105) is insertable into the communication module (100) in a connection-proof manner.

5. Communication module (100) according to any one of the preceding claims, wherein the overvoltage protection module (105) is integrated into a protection module housing and the communication circuit (101) is integrated into a circuit housing.

6. Communication module (100) according to claim 5, wherein the protection module housing and the circuit housing are mutually adapted in a form-technical manner in order to prevent an incorrect insertion of the overvoltage protection module (105).

7. Communication module (100) according to any one of the preceding claims, wherein the communication module (100) is mountable on a top-hat rail.

8. Communication module (100) according to any one of the preceding claims, wherein the communication circuit (101) comprises a plurality of communication interfaces for transmitting data on a respective electrical data line (103) and wherein the pluggable overvoltage protection module (105) is adapted to protect against an overvoltage on each of the electrical data lines (103).

9. Communication module (100) according to any one of the preceding claims, wherein the overvoltage protection module (105) is adapted to detect an overvoltage on the electrical data line (103).

10. Communication module (100) according to any one of the preceding claims, wherein the external data network (111) is a local network or a mobile network.

11. Communication module (100) according to any one of the preceding claims, wherein the communication module (100) comprises a web server for externally polling the status of the overvoltage protection module (105).

12. Communication module (100) according to any one of the preceding claims, wherein the communication module (100) is a modem, a switch or a router.

## Revendications

1. Module de communication (100), comprenant :
un circuit de communication (101) doté d'une interface de communication pour transmettre des données sur une ligne de données électrique (103) ; et
un module de protection contre les surtensions (105) pour protéger le circuit de communication (101) contre les surtensions sur la ligne de données électrique (103), lequel module de protection contre les surtensions est intégré de manière enfichable dans le module de communication (100),
dans lequel le module de communication (100) comprend une interface de données (107) pour transférer des données entre le module de protection contre les surtensions (105) et le circuit de communication (101),
**caractérisé en ce que** le module de protection contre les surtensions (105) est adapté pour transmettre un état du module de protection contre les surtensions (105) au circuit de communication (101), et dans lequel le circuit de communication (101) comprend une interface de communication à distance (109) pour transmettre l'état du module de protection contre les surtensions (105) à un réseau de données externe (111),
le module de communication (100) étant configuré pour envoyer automatiquement une alarme via le réseau de données externe (111), qui indique que le module de protection contre les surtensions (105) est pré-endommagé.

2. Module de communication (100) selon la revendication 1, dans lequel le module de protection contre les surtensions enfichable (105) comprend un tube à décharge gazeuse, une diode de protection et/ou un thyristor.

3. Module de communication (100) selon l'une des revendications précédentes, dans lequel le module de protection contre les surtensions enfichable (105) présente un seul côté de connexion pour connecter électriquement le module de protection contre les surtensions (105) au circuit de communication (101).

4. Module de communication (100) selon l'une quelconque des revendications précédentes, dans lequel le module de protection contre les surtensions enfichable (105) peut être inséré dans le module de communication (100) de manière étanche à la connexion.

5. Module de communication (100) selon l'une quelconque des revendications précédentes, dans lequel le module de protection contre les surtensions (105) est intégré dans un boîtier de module de protection et le circuit de communication (101) est intégré dans un boîtier de circuit.

6. Module de communication (100) selon la revendication 5, dans lequel le boîtier du module de protection et le boîtier du circuit sont mutuellement adaptés d'une manière technique afin d'empêcher une insertion incorrecte du module de protection contre les surtensions (105).

7. Module de communication (100) selon l'une quelconque des revendications précédentes, dans lequel le module de communication (100) peut être monté sur un rail chapeau.

8. Module de communication (100) selon l'une quelconque des revendications précédentes, dans lequel le circuit de communication (101) comprend une pluralité d'interfaces de communication pour transmettre des données sur une ligne de données électrique respective (103) et dans lequel le module de protection contre les surtensions enfichable (105) est adapté pour protéger contre une surtension sur chacune des lignes de données électriques (103).

9. Module de communication (100) selon l'une quelconque des revendications précédentes, dans lequel le module de protection contre les surtensions (105) est adapté pour détecter une surtension sur la ligne de données électrique (103).

10. Module de communication (100) selon l'une quelconque des revendications précédentes, dans lequel le réseau de données externe (111) est un réseau local ou un réseau mobile.

11. Module de communication (100) selon l'une quelconque des revendications précédentes, dans lequel le module de communication (100) comprend un serveur Web pour interroger en externe l'état du module de protection contre les surtensions (105).

12. Module de communication (100) selon l'une quelconque des revendications précédentes, dans lequel le module de communication (100) est un modem, un commutateur ou un routeur.
